# EUROPEAN PATENT APPLICATION

(11) **EP 4 447 546 A1**
(43) Date of publication of application: **16.10.2024**
(21) Application number: 22914410.0
(22) Date of filing: 20.12.2022
(51) Int. Cl.: H04W 36/00

(54) **COMMUNICATION METHOD AND COMMUNICATION APPARATUS**

(30) Priority: 28.12.2021 CN 202111622197
(71) Applicant: Huawei Technologies Co., Ltd., Shenzhen, Guangdong 518129 (CN)
(72) Inventor: XU, Bin, Shenzhen, Guangdong 518129 (CN); CHEN, Lei, Shenzhen, Guangdong 518129 (CN)
(74) Representative: Maiwald GmbH
(86) International application number: PCT/CN2022/140403
(87) International publication number: WO 2023/125156

(57) **Abstract**

This application relates to a communication method, a communication apparatus, and a system. A first terminal receives first indication information from an access network device, where the first indication information indicates to enable aggregated transmission or indicates to disable the aggregated transmission, the aggregated transmission includes first data transmission that is performed with the access network device through a first terminal device and a second terminal device, first data includes first sub-data and second sub-data, the first sub-data is transmitted to the access network device through the first terminal device, and the second sub-data is transmitted to the access network device through the second terminal device; and enables or disables the aggregated transmission based on the first indication information. In a possible embodiment of this application, the first terminal may dynamically enable or disable aggregated transmission based on an indication of the access network device. This reduces power consumption of service transmission of a terminal.

## Description

This application claims priority to Chinese Patent Application No. 202111622197.9, filed with the China National Intellectual Property Administration on December 28, 2021 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Currently, a wireless communication system is widely deployed to provide various types of communication, such as a voice service and a data service. The communication system includes one or more terminal devices connected to a core network via an access network, to implement communication between a plurality of communication devices. In some scenarios, for example, in an industrial scenario, reliability and a bandwidth of service transmission are required to be high. For example, a large quantity of high-definition camera services need to be backhauled to monitor industrial production in real time, or a high-definition camera needs to perform service live broadcast, or a surveillance camera service needs to be backhauled. Transmission of these multimedia services requires a very high transmission bandwidth and very high transmission power. However, a transmission bandwidth and transmission power of a conventional terminal device usually cannot meet transmission requirements in these scenarios. Therefore, how to flexibly meet the transmission requirements in the foregoing scenarios is an urgent problem to be resolved.

### SUMMARY

Embodiments of this application provide a communication method and a communication apparatus, to reduce power consumption during data transmission.

According to a first aspect, an embodiment of this application provides a communication method. The method may be performed by a terminal (a first terminal or a second terminal), or may be performed by a component (for example, a processor, a chip, or a chip system) of the terminal. For example, the method is performed by the first terminal, and the method includes: receiving first indication information from an access network device, where the first indication information indicates to enable aggregated transmission or indicates to disable the aggregated transmission, the aggregated transmission includes first data transmission that is performed with the access network device through the first terminal and the second terminal, first data includes first sub-data and second sub-data, the first sub-data is transmitted to the access network device through the first terminal, and the second sub-data is transmitted to the access network device through the second terminal; and enabling or disabling the aggregated transmission based on the first indication information. In this solution, the access network device notifies the terminal to enable or disable the aggregated transmission, so that the terminal is enabled to reduce power consumption of service transmission.

Optionally, the first indication information further includes first sub-indication information, and the first sub-indication information indicates a manner of distributing the first data into the first sub-data and/or the second sub-data. It may be easily understood that the first sub-indication information may also be referred to as first configuration information. In this embodiment of this application, a message name or an information name is not limited, and configuration information may be replaced with indication information. The following uses an example in which the first sub-indication information is the first configuration information for description. Optionally, the first data is distributed based on the first configuration information. In this manner, the first indication information carries offloading indication information. For example, the offloading indication information may be an offloading rule that indicates a rule used by the first terminal to send data to the access network device. For example, the offloading rule may be data transmission proportion configuration, or may be a data transmission quantity.

Optionally, the first indication information includes at least one of the following: aggregated-transmission enabling indication information, aggregated-transmission disabling indication information, information that indicates to enable or disable aggregated transmission, transmission proportion information, and transmitted data volume distribution information.

Optionally, the distributing the first data includes: sending the second sub-data to the second terminal. Optionally, the first terminal sends the second sub-data to the second terminal through a communication link. In this manner, the first terminal allocates, to the second terminal, which data is to be sent by the second terminal to the access network device.

Optionally, sending response information of the first indication information to the access network device includes: sending data to the access network device based on the first indication information. Optionally, the first data is data from an industrial device, and the first terminal is connected to the industrial device. It may be easily understood that the first data may alternatively be data of the first terminal and/or data of the second terminal. This is not limited in this application.

According to a second aspect, an embodiment of this application provides a communication method. The method may be performed by a network device (for example, an access network device), or may be performed by a component (for example, a processor, a chip, or a chip system) of the network device. For example, the method is performed by the access network device, and the method includes: sending first indication information to a first terminal, where the first indication information indicates to enable aggregated transmission or indicates to disable the aggregated transmission, the aggregated transmission includes first data transmission that is performed with the access network device through the first terminal and a second terminal, first data includes first sub-data and second sub-data, the first sub-data is transmitted to the access network device through the first terminal, and the second sub-data is transmitted to the access network device through the second terminal; and receiving response information of the first indication information from the first terminal. In this solution, the access network device notifies the terminal to enable or disable the aggregated transmission, so that a terminal is enabled to reduce power consumption of service transmission.

In an optional implementation, the method further includes: determining the first indication information based on first information, where the first information includes one or more of the following: quality of service information, data transmission rate information, buffer status information, channel quality information, or terminal capability information. In this manner, the access network device determines, based on reference information (for example, the first information), whether the aggregated transmission needs to be enabled or disabled, so that power and electricity quantity can be saved when the aggregated transmission does not need to be enabled.

Optionally, the determining the first indication information based on first information includes: determining the first indication information based on the first information and threshold information, where the threshold information includes a threshold corresponding to the first information. The threshold information may also be referred to as threshold information corresponding to the first information. In this manner, the access network device determines the first indication information by determining the first information and the threshold information.

In an optional implementation, the method further includes: receiving second indication information from a core network device, where the second indication information indicates to enable the aggregated transmission or indicates to disable the aggregated transmission; and determining the first indication information based on the second indication information. In this manner, that the access network device determines the first indication information after receiving the second indication information from the core network device may be understood as that the access network device forwards the indication information of the core network device. Optionally, the first indication information and the second indication information may include same indication information, or the access network device may determine, after receiving the second indication information, to send the first indication information.

Optionally, the first indication information further includes first configuration information (first sub-indication information, where an example in which the first sub-indication information is the first configuration information is used for description), and the first configuration information indicates a manner of distributing the first data into the first sub-data and the second sub-data. Optionally, the first configuration information includes transmission proportion information and/or transmitted data volume distribution information. In this manner, the first indication information carries offloading indication information. For example, the offloading indication information may be an offloading rule that indicates a rule used by the first terminal to send data to the access network device.

In an optional implementation, the method further includes: sending third indication information to the second terminal, where the third indication information indicates to enable the aggregated transmission, or indicates to disable the aggregated transmission. In this manner, the access network device notifies the second terminal to enable or disable the aggregated transmission.

Optionally, the third indication information further includes third configuration information (third sub-indication information, where an example in which the third sub-indication information is the third configuration information is used for description), and the third configuration information indicates a manner of distributing the first data into the first sub-data and/or the second sub-data. Optionally, the third configuration information includes transmission proportion information and/or transmitted data volume distribution information.

Optionally, the third indication information includes at least one of the following: aggregated-transmission enabling indication information, aggregated-transmission disabling indication information, information that indicates to enable or disable aggregated transmission, transmission proportion information, and transmitted data volume distribution information.

Optionally, the first indication information and the third indication information are determined. In this manner, after determining whether to enable or disable the aggregated transmission, the access network device respectively sends the first indication information and the third indication information to the first terminal and the second terminal.

Optionally, the receiving response information of the first indication information from the first terminal includes: receiving data from the first terminal.

According to a third aspect, an embodiment of this application provides a communication method. The method may be performed by a network device (for example, a core network device), or may be performed by a component (for example, a processor, a chip, or a chip system) of the network device. For example, the method is performed by the core network device, and the method includes: sending second indication information to an access network device, where the second indication information indicates to enable aggregated transmission or indicates to disable the aggregated transmission, the aggregated transmission includes first data transmission that is performed with the access network device through a first terminal and a second terminal, first data includes first sub-data and second sub-data, the first sub-data is transmitted to the access network device through the first terminal, and the second sub-data is transmitted to the access network device through the second terminal; and receiving response information of the second indication information from the access network device. In this solution, the core network notifies the access network device to enable or disable the aggregated transmission, so that a terminal is enabled to reduce power consumption of service transmission.

In an optional implementation, the method further includes: determining the second indication information based on second information, where the second information includes one or more of the following: quality of service information, data transmission rate information, buffer status information, channel quality information, application layer feedback information, or terminal capability information.

Optionally, the determining the second indication information based on second information includes: determining the second indication information based on the second information and threshold information, where the threshold information includes a threshold corresponding to the second information. The threshold information may also be referred to as threshold information corresponding to the second information.

Optionally, the second indication information further includes second configuration information, the second configuration information is used to determine the first terminal and/or the second terminal, and the second configuration information includes a correspondence between the first terminal and the second terminal. In this manner, the core network device determines, based on reference information (for example, the second information), whether to enable or disable the aggregated transmission, so that power and electricity quantity can be saved when the aggregated transmission does not need to be enabled.

Optionally, the receiving response information of the second indication information from the access network device includes: receiving data from the access network device.

According to a fourth aspect, an embodiment of this application provides a communication method. The method may be performed by a terminal (a first terminal or a second terminal), or may be performed by a component (for example, a processor, a chip, or a chip system) of the terminal. For example, the method is performed by the first terminal, and the method includes: sending fourth indication information to an access network device, where the fourth indication information indicates to enable aggregated transmission or indicates to disable the aggregated transmission, the aggregated transmission includes first data transmission that is performed with the access network device through a first terminal and a second terminal, first data includes first sub-data and second sub-data, the first sub-data is transmitted to the access network device through the first terminal, and the second sub-data is transmitted to the access network device through the second terminal; and receiving response information that is of the fourth indication information and that is sent by the access network device. In this solution, a terminal device determines and notifies the access network device to enable or disable the aggregated transmission, so that the terminal is enabled to reduce power consumption of service transmission.

In an optional implementation, the method further includes: determining the fourth indication information based on third information, where the third information includes one or more of the following: quality of service information, data transmission rate information, buffer status information, channel quality information, or terminal capability information.

Optionally, the determining the fourth indication information based on third information includes: determining the fourth indication information based on the third information and threshold information, where the threshold information includes a threshold corresponding to the third information. The threshold information may also be referred to as threshold information corresponding to the third information.

In an optional implementation, the method further includes: determining fourth configuration information (fourth sub-indication information, where an example in which the fourth sub-indication information is the fourth configuration information is used for description), where the fourth configuration information indicates a manner of distributing the first data to the first sub-data and the second sub-data. Optionally, the fourth configuration information includes transmission proportion information and/or transmitted data volume distribution information.

Optionally, the determining fourth configuration information includes: the response information of the fourth indication information includes the fourth configuration information.

Optionally, the determining fourth configuration information includes: determining the fourth configuration information based on one or more of transmit power information, power headroom report information, channel quality information, and traffic control information corresponding to the first terminal and/or the second terminal.

In this manner, the first terminal determines, based on reference information (for example, the third information), whether to enable or disable the aggregated transmission, so that power and electricity quantity can be saved when the aggregated transmission does not need to be enabled.

In an optional implementation, the method further includes: sending fifth indication information to the second terminal, where the fifth indication information indicates to enable the aggregated transmission, or indicates to disable the aggregated transmission. In this manner, after receiving a notification from the first terminal, the access network device forwards the notification to the second terminal.

According to a fifth aspect, an embodiment of this application provides a communication method. The method may be performed by a terminal (a second terminal), or may be performed by a component (for example, a processor, a chip, or a chip system) of the terminal. For example, the method is performed by the second terminal, and the method includes: receiving fifth indication information from a first terminal, where the fifth indication information indicates to enable aggregated transmission or indicates to disable the aggregated transmission, the aggregated transmission includes first data transmission that is performed with an access network device through the first terminal and the second terminal, first data includes first sub-data and second sub-data, the first sub-data is transmitted to the access network device through the first terminal, and the second sub-data is transmitted to the access network device through the second terminal; and enabling or disabling the aggregated transmission based on the fifth indication information. Optionally, response information of the fifth indication information is sent to the first terminal. In this manner, the second terminal receives, from the first terminal, the indication information that indicates to enable or disable the aggregated transmission, so that the second terminal is enabled to reduce power consumption of service transmission. In an optional implementation, the method further includes: determining fifth configuration information (fifth sub-indication information, where an example in which the fifth sub-indication information is the fifth configuration information is used for description), where the fifth configuration information indicates a manner of distributing the first data to the first sub-data and the second sub-data. Optionally, the fifth configuration information includes transmission proportion information and/or transmitted data volume distribution information.

Optionally, the determining fifth configuration information includes: the fifth indication information includes the fifth configuration information, and the fifth configuration information is used to distribute the first data into the first sub-data and/or the second sub-data. Optionally, the first data is distributed based on the fifth configuration information.

Optionally, the determining fifth configuration information includes: receiving the fifth configuration information from the access network device.

According to a fifth aspect, an embodiment of this application provides a communication method. The method may be performed by a network device (for example, an access network device), or may be performed by a component (for example, a processor, a chip, or a chip system) of the network device. For example, the method is performed by the access network device, and the method includes: receiving fourth indication information from a first terminal, where the fourth indication information indicates to enable aggregated transmission or indicates to disable the aggregated transmission, the aggregated transmission includes first data transmission that is performed with an access network device through the first terminal and a second terminal, first data includes first sub-data and second sub-data, the first sub-data is transmitted to the access network device through the first terminal, and the second sub-data is transmitted to the access network device through the second terminal; and enabling or disabling the aggregated transmission based on the fourth indication information. Optionally, response information of the fourth indication information is sent to the first terminal. In this solution, a terminal device determines and notifies the access network device to enable or disable the aggregated transmission, so that the terminal is enabled to reduce power consumption of service transmission.

Optionally, sending the response information of the fourth indication information to the first terminal includes: sending fourth configuration information to the first terminal, where the fourth configuration information indicates a manner of distributing the first data into the first sub-data and the second sub-data. Optionally, the fourth configuration information includes transmission proportion information and/or transmitted data volume distribution information.

In an optional implementation, the method further includes: sending fifth configuration information to the second terminal, where the fifth configuration information indicates a manner of distributing the first data into the first sub-data and the second sub-data. The fifth configuration information includes transmission proportion information and/or transmitted data volume distribution information.

It may be easily understood that, in this embodiment of this application, that "distributing the first data into the first sub-data and the second sub-data" may be understood as "a manner of distributing the first data into the first sub-data and the second sub-data".

According to a sixth aspect, a communication apparatus is provided. The communication apparatus may be the terminal device (for example, the first terminal or the second terminal) in any one of the first aspect to the fifth aspect, or an electronic device configured in the terminal device, or a large device including the terminal device. The terminal device includes a corresponding means (means) or modules configured to perform the foregoing method. For example, the communication apparatus includes a processing unit (also referred to as a processing module sometimes) and a transceiver unit (also referred to as a transceiver module sometimes). The transceiver unit is configured to receive first indication information from an access network device, where the first indication information indicates to enable aggregated transmission, or indicates to disable the aggregated transmission. The processing unit is further configured to enable or disable the aggregated transmission based on the first indication information.

For another example, the communication apparatus includes: a processor, coupled to a memory and configured to execute instructions in the memory, to implement the method performed by the terminal device in any one of the first aspect to fifth aspect. Optionally, the communication apparatus further includes another component, for example, an antenna, an input/output module, and an interface. These components may be hardware, software, or a combination of software and hardware.

According to a sixth aspect, a communication apparatus is provided. The communication apparatus may be the access network device or the core network device according to any one of the first aspect to the third aspect. The communication apparatus has a function of the foregoing access network device or a function of the foregoing core network device. The communication apparatus may serve as an access network device of a first terminal device, or may serve as an access network device of a second terminal device. The access network device is, for example, a base station, or a baseband apparatus in the base station. In an optional implementation, the communication apparatus includes the baseband apparatus and a radio frequency apparatus. In another optional implementation, the communication apparatus includes a processing unit (also referred to as a processing module sometimes) and a transceiver unit (also referred to as a transceiver module sometimes).

The processing unit is configured to: send first indication information to a terminal device through the transceiver unit, and receive response information of the first indication information from the terminal device through the transceiver module.

In an optional implementation, the communication apparatus includes a processing unit, configured to: be coupled to a storage unit, and execute a program or instructions in the storage unit, so that the communication apparatus can perform a function of the access network device or a function of the core network device.

According to a seventh aspect, a computer-readable storage medium is provided. The computer-readable storage medium is configured to store a computer program or instructions. When the computer program or the instructions are run, the method performed by the terminal device, the access network device, or the core network device in the foregoing aspects is implemented.

According to an eighth aspect, a computer program product including instructions is provided. When the computer program product runs on a computer, the methods in the foregoing aspects are implemented.

### BRIEF DESCRIPTION OF DRAWINGS

FIG. 1 is a diagram of a communication system according to an embodiment of this application;
FIG. 2 is a diagram of an application scenario according to an embodiment of this application;
FIG. 3 is a flowchart of a communication method according to an embodiment of this application;
FIG. 4 is a flowchart of a communication method according to an embodiment of this application;
FIG. 5 is another flowchart of a communication method according to an embodiment of this application;
FIG. 6 is still another flowchart of a communication method according to an embodiment of this application;
FIG. 7 is a block diagram of a communication apparatus according to an embodiment of this application;
FIG. 8 is a block diagram of a terminal device according to an embodiment of this application; and
FIG. 9 is a block diagram of a network device according to an embodiment of this application.

### DESCRIPTION OF EMBODIMENTS

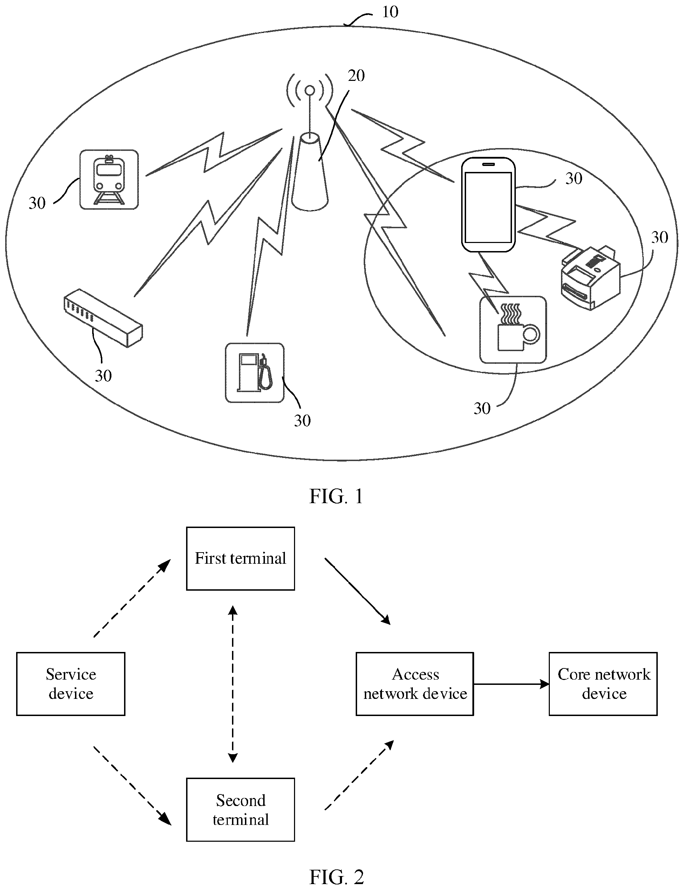

A technology provided in embodiments of this application may be applied to a communication system 10 shown in FIG. 1. The communication system 10 includes one or more communication apparatuses 30 (for example, terminal devices) connected to one or more core network devices via one or more access network devices 20, to implement communication between a plurality of communication devices. The communication system may be, for example, a communication system that supports a 2G, 3G, 4G, or 5G (sometimes also referred to as a new radio, NR) access technology, a wireless fidelity (wireless fidelity, Wi-Fi) system, or a 3rd generation partnership project (3rd generation partnership project, 3GPP) related cellular system, a communication system that supports convergence of a plurality of wireless technologies, or a future-oriented evolved system. It may be easily understood that embodiments of this application may alternatively be applied to another communication system. For example, in the communication system, there is an entity or a network element that needs to send transmission direction indication information, there is another entity or network element that needs to receive the indication information, and determine, based on the indication information, a data transmission direction that is within a time period.

The following describes some terms in embodiments of this application, to facilitate understanding of a person skilled in the art.

In this application, the terminal device is a device with a wireless transceiver function, and may be a fixed device, a mobile device, a handheld device (for example, a mobile phone), a wearable device, a vehicle-mounted device, or a wireless apparatus (for example, a communication module, a modem, or a chip system) built in the device. The terminal device is configured to connect a person, an object, a machine, and the like, and may be widely used in various scenarios. For example, the terminal device includes but is not limited to terminal devices in the following scenarios: cellular communication, device-to-device (device-to-device, D2D) communication, vehicle-to-everything (vehicle-to-everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), remote medical (remote medical), a smart grid (smart grid), smart furniture, smart office, a smart wearable, smart transportation, a smart city (smart city), an uncrewed aerial vehicle, and a robot. The terminal device may sometimes be referred to as user equipment (user equipment, UE), a terminal, an access station, a UE station, a remote station, a wireless communication device, a user apparatus, or the like. For ease of description, an example in which the terminal device is UE is used for description in this application.

A network device in this application includes, for example, an access network device and/or a core network device. The access network device is a device with a wireless transceiver function, and is configured to communicate with the terminal device. The access network device includes but is not limited to a base station (BTS, NodeB, eNodeB/eNB, or gNodeB/gNB) in the communication system, a transmission reception point (transmission reception point, TRP), a base station that is subsequently evolved from 3GPP, and an access node, a wireless relay node, a wireless backhaul node, and the like in the Wi-Fi system. The base station may be a macro base station, a micro base station, a pico base station, a small cell, a relay station, or the like. A plurality of base stations may support networks of a same access technology mentioned above, or may support networks of different access technologies mentioned above. The base station may include one or more co-site or non-co-site transmission reception points. Alternatively, the network device may be a radio controller, a central unit (central unit, CU), and/or a distributed unit (distributed unit, DU) in a cloud radio access network (cloud radio access network, CRAN) scenario. Alternatively, the network device may be a server, a wearable device, a vehicle-mounted device, or the like. For example, a network device in the V2X technology may be a road side unit (road side unit, RSU). The following uses an example in which the access network device is the base station for description. A plurality of network devices in the communication system may be base stations of a same type, or may be base stations of different types. The base station may communicate with the terminal device, or may communicate with the terminal device through a relay station. The terminal device may communicate with a plurality of base stations in different access technologies. The base station includes a baseband apparatus and a radio frequency apparatus. The baseband apparatus may be implemented by one or more nodes, and the radio frequency apparatus may be independently implemented remotely from the baseband apparatus, may be integrated into the baseband apparatus, or a part of the radio frequency apparatus is implemented remotely from the baseband apparatus and a remaining part is integrated into the baseband apparatus.

The network device in the RAN may include a central unit (CU) and a distributed unit (DU), and a plurality of DUs may be controlled by one CU in a centralized manner. The CU and the DU may be divided based on protocol layer functions of a wireless network that the CU and the DU have. For example, functions of a packet data convergence protocol (packet data convergence protocol, PDCP) layer and a protocol layer above the PDCP layer are set on the CU, and functions of protocol layers below the PDCP layer, for example, an RLC layer and a MAC layer, are set on the DU. It should be noted that division into the protocol layers is merely an example, and there may be another division of protocol layers. The radio frequency apparatus may not be disposed in the DU but is disposed remotely from the DU, may be integrated into the DU, or a part of the radio frequency apparatus is disposed remotely from the DU and a remaining part is integrated into the DU. This is not limited in this application. Alternatively, a control plane (CP) and a user plane (UP) of the CU may be separated, and are implemented by different entities that are respectively a control plane CU entity (CU-CP entity) and a user plane CU entity (CU-UP entity). In the network architecture, signaling generated by the CU may be sent to UE via a DU, or signaling generated by the UE may be sent to the CU via the DU. The DU may transparently transmit the signaling to the UE or the CU by directly encapsulating the signaling at a protocol layer without parsing the signaling. In the network architecture, the CU is classified as a network device on a RAN side. In addition, the CU may be classified as a network device on a CN side. This is not limited in this application. The core network device is configured to implement functions such as mobility management, data processing, session management, and policy and charging. Names of devices that implement core network functions in systems of different access technologies may be different. This is not limited in this application.

A 5G system is used as an example, and the core network device includes: an access and mobility management function (access and mobility management function, AMF), a session management function (session management function, SMF), a user plane function (user plane function, UPF), and the like.

In embodiments of this application, a communication apparatus for implementing a network device function may be a network device, or may be an apparatus that can support a network device in implementing the function, for example, a chip system. The apparatus may be installed in the network device. In the technical solutions provided in embodiments of this application, an example in which the apparatus configured to implement the function of the network device is a network device is used for describing the technical solutions provided in embodiments of this application.

In this application, a quantity of nouns, unless otherwise specified, means "singular nouns or plural nouns", that is, "one or more". "At least one" means one or more, and "a plurality of means two or more. The term and/or describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. For example, A/B indicates A or B. "At least one of the following items" or a similar expression means any combination of these items, including any combination of a single item or a plurality of items. For example, at least one item (piece) of a, b, or c may represent: a, b, c, a and b, a and c, b and c, or a, b, and c. Herein, a, b, and c may be singular or plural.

Ordinal numerals such as "first" and "second" mentioned in embodiments of this application are used to distinguish between a plurality of objects, and are not intended to limit sizes, content, a sequence, a time sequence, priorities, importance degrees, or the like of the plurality of objects. For example, first indication information and second indication information may be same indication information, or may be different indication information. In addition, these names do not indicate that the two pieces of indication information have different information amounts, content, priorities, importance, or the like.

A programmable logic controller (programmable logic controller, PLC) is a controller commonly used in an industrial scenario. Data (for example, control data) generated by the PLC is sent to a radio access network (radio access network, RAN) through two terminals (for example, UEs), and is sent to a core network device (for example, a UPF) through the RAN. The PLC herein is only an example. In an actual application scenario, the PLC may be a camera, a video camera, a monitoring device, or another device. This is not limited herein.

To improve an uplink data transmission rate, the two UEs separately transmit a part of the data to the RAN, and a sum of data transmitted by the two UEs is all of the data. In this way, transmission of the two UEs is aggregated, a total transmission rate is equal to a sum of those of the two UEs, and total transmission power is equal to a sum of those of the two UEs. This is referred to as UE aggregated transmission.

In a possible solution, once aggregated transmission is configured for the UEs, the UEs always communicate with the RAN through the aggregated transmission. However, in wireless communication, an uplink transmission rate is related to a distance between the UE and the RAN. For example, when the UE is located in a cell center, that is, is close to the RAN, channel quality is good. In this case, a transmission rate between the UE and the RAN is high, and transmission power of the UE is also sufficient. Therefore, if the UE aggregated transmission is performed in this case, power and electricity quantity are wasted.

Therefore, how to reduce power consumption in an aggregated transmission process is an urgent problem to be resolved. It may be easily understood that uplink data transmission is used as an example in this application, and a network architecture and a transmission mechanism in this application are also applicable to downlink data transmission. This is not limited herein.

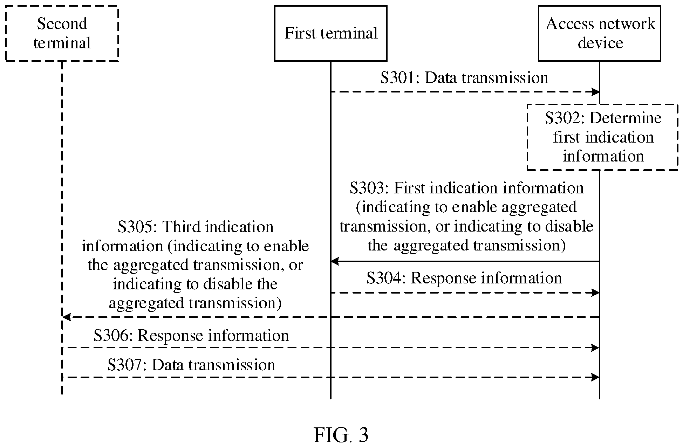

FIG. 2 shows a communication network architecture in a communication system 10 according to this application. All subsequently provided embodiments (for example, an embodiment shown in FIG. 3) are applicable to the architecture. The communication network architecture includes one or more terminals (UE is used as an example for description subsequently) connected to one or more core network devices through one or more access network devices 20, to implement communication between a plurality of communication devices. Optionally, the communication architecture further includes one or more communication devices (for example, an industrial device, and an industrial device 1 shown in the figure) connected to one or more UEs (UE 1 and UE 2 shown in the figure). Optionally, the industrial device is connected to the UE through a switch, a router, or a hub, or the industrial device is directly connected to the UE. This is not limited in embodiments of this application. The industrial device may be a device related to an industrial application, for example, a PLC, a camera, a video camera, a monitoring device, or another device. The "aggregated transmission" in this application means that at least two UEs jointly transmit data to an access network device, to improve an uplink transmission rate. In a possible manner, the industrial device is connected to a plurality of UEs (for example, the industrial device 1 is connected to the UE 1 and the UE 2). Uplink service data is sent by the industrial device 1 to the UE 1 and/or the UE 2, and then the data is sent to a RAN and a core network device through the UE 1 and/or the UE 2. In another possible manner, the industrial device is connected to single UE (for example, the industrial device 1 is connected to the UE 1). The UE 1 directly sends data to the RAN and the core network device, and/or sends data to the RAN and the core network device through the UE 2.

In subsequent descriptions, a first terminal (the UE 1 is used as an example), a second terminal (the UE 2 is used as an example), and a network device may be respectively a first terminal, a second terminal, and a network device in the network architecture shown in FIG. 2. In the accompanying drawings corresponding to embodiments of this application, steps represented by dashed lines are optional steps. Details are not described below.

FIG. 3 shows a communication method 300 according to an embodiment of this application.

S303: An access network device sends first indication information to a first terminal, and correspondingly, the first terminal receives the first indication information from the access network device.

For example, the first indication information indicates to enable aggregated transmission, or indicates to disable the aggregated transmission. The aggregated transmission includes first data transmission that is performed with the access network device through the first terminal and a second terminal, where the first data includes first sub-data and second sub-data, the first sub-data is transmitted to the access network device through the first terminal, and the second sub-data is transmitted to the access network device through the second terminal. The transmission includes uplink transmission or downlink transmission.

In a possible implementation, the first indication information further includes first configuration information, and the first configuration information indicates a manner of distributing the first data into the first sub-data and/or the second sub-data. Optionally, the first configuration information includes transmission proportion information and/or transmitted data volume distribution information. Correspondingly, the first terminal distributes the first data based on the first configuration information. It may be easily understood that distributing the first data may be determining the first sub-data and/or the second sub-data that need/needs to be transmitted by the first terminal, or may be sending the second sub-data to the second terminal, for example, determining the second sub-data that needs to be transmitted by the second terminal and sending the second sub-data to the second terminal.

Optionally, the first indication information includes at least one of the following: aggregated-transmission enabling indication information, aggregated-transmission disabling indication information, information that indicates to enable or disable aggregated transmission, transmission proportion information, and transmitted data volume distribution information.

It may be easily understood that an implementation of an indication of indication information is not limited in embodiments of this application. For example, the indication information may be an explicit indication or an implicit indication, or may be an indication by using one or more of information, or may be an indication by using one or more bits. Configuration information may also be referred to as indication information. For example, the first configuration information may also be referred to as first sub-indication information. Similarly, second configuration information to fifth configuration information may also be referred to as second sub-indication information to fifth sub-indication information. In embodiments of this application, the first configuration information to the fifth configuration information is used as an example for description, and this is not limited.

It may be easily understood that aggregated transmission may be uplink transmission or downlink transmission. In embodiments of this application, uplink transmission is used as an example. Implementation of downlink transmission is similar to that of the uplink transmission, and a difference lies in a transmission direction.

Optionally, the first data is data from an industrial device, and the first terminal is connected to the industrial device. Optionally, the industrial device is connected to the first terminal and the second terminal.

The first indication information may be carried in a message like a radio resource control (radio resource control, RRC) message, a media access control (media access control, MAC) control element (control element, CE), or downlink control information (downlink control information, DCI) and sent to the terminal.

Optionally, the method 300 further includes step S302: Determine the first indication information.

In a possible implementation, the access network device determines the first indication information based on first information.

The first information includes one or more of the following: quality of service information, data transmission rate information, buffer status information, channel quality information, or terminal capability information.

The QoS information includes a QoS requirement of a service. Optionally, the QoS requirement information is QoS requirement information of a service of the industrial device corresponding to the first terminal and/or the second terminal. For example, when the industrial device is a camera, the QoS requirement information is related to a video.

The data transmission rate information includes a data transmission rate of a service. The buffer status information includes a buffer status of the first terminal and/or that of the second terminal.

The channel quality information includes channel quality between the first terminal and the access network device and/or channel quality between the second terminal and the access network device. The terminal capability information includes whether the terminal supports an aggregated transmission feature, function, or the like.

It may be easily understood that the first information includes first information corresponding to the first terminal and/or first information corresponding to the second terminal. For example, the QoS requirement information includes a QoS requirement of a service of the first terminal and/or a QoS requirement of a service of the second terminal.

The access network device may determine or obtain one or more types of the first information in a plurality of possible manners.

In a possible manner, one or more types of the first information are provided by the access network device, and the access network device obtains the one or more types of the first information through measurement, statistics collection, or calculation. For example, the access network device obtains the data transmission rate information and the channel quality information through measurement.

In another possible manner, the access network device obtains the one or more types of the first information through another device (for example, the first terminal, the second terminal, or a core network device). For example, the first terminal and/or the second terminal report/reports the buffer status information, the channel quality information, or the terminal capability information to the access network device. For another example, the access network device obtains the QoS requirement information through the core network device.

For example, when a service is QoS, for example, the service is a video service, the access network device considers that aggregated transmission needs to be enabled for the service, and the first terminal determines to enable the aggregated transmission.

In still another possible manner, the access network device determines the first indication information based on the first information and threshold information. For example, the access network device determines at least one threshold (or referred to as a threshold), and when a value of corresponding first information is greater than, equal to, or less than the threshold, it is considered that the aggregated transmission needs to be enabled. It may be easily understood that the access network device determines whether to enable the aggregated transmission in a plurality of possible implementations, and flexible adjustment may be made based on an actual requirement. This is not limited in this embodiment of this application. In other words, a manner of determining whether to enable or disable the aggregated transmission is not limited in this embodiment of this application. For example, for a terminal capability, aggregated transmission is configured for a terminal and aggregated-transmission enabling indication information is sent only when the terminal capability supports the aggregated transmission. For the quality of service information, the access network device sends an aggregated-transmission enabling indication only when a quality of service requirement of a current service matches or is consistent with a preset quality of service requirement. It may be easily understood that, to avoid repetition, a manner in which the terminal and the core network device determine whether to enable or disable the aggregated transmission may be similar to a determining manner of the access network device. Optionally, the threshold information may be predefined or preconfigured, or the threshold information is determined by the first terminal or the access network device, or the threshold information is determined by the core network device. The threshold information may include one or more thresholds corresponding to the one or more of information in the first information.

In yet still another possible implementation, the core network device sends second indication information to the access network device. Correspondingly, the access network device receives the second indication information from the core network device, where the second indication information indicates to enable the aggregated transmission or indicates to disable the aggregated transmission. The access network device determines the first indication information based on the second indication information.

Optionally, the method 300 further includes step S301: The first terminal sends data to the access network device, and correspondingly, the access network device receives the data from the terminal.

Optionally, the method 300 further includes step S304: The first terminal sends response information of the first indication information to the access network device, and correspondingly, the access network device receives the response information from the first terminal. In other words, the step of sending the response information of the first indication information may be replaced with that the first terminal enables or disables the aggregated transmission based on the first indication information.

For example, a message sent by the first terminal to the access network device in a process of communicating with the access network device is considered as the response information. In other words, when the first terminal sends the message to the access network device, it is considered that the first terminal responds to the first indication information. For example, the response information includes data transmitted through aggregated transmission. For another example, the response message includes data transmitted according to a distribution ratio. For another example, the response message includes reception determining information that indicates that the first indication information is successfully received.

Alternatively, the first terminal may not send the response information of the first indication information to the access network device. For example, the first terminal may disable the aggregated transmission after receiving the first indication information, and does not send a response message to the second network device. Therefore, S304 is an optional step.

Optionally, the method 300 further includes step S305: The access network device sends third indication information to the second terminal, and correspondingly, the second terminal receives the third indication information from the access network device.

For example, the third indication information indicates to enable the aggregated transmission, or indicates to disable the aggregated transmission.

In a possible implementation, the third indication information further includes third configuration information (third sub-indication information, where an example in which the third sub-indication information is the third configuration information is used for description), and the third configuration information indicates a manner of distributing the first data into the first sub-data and/or the second sub-data. The third configuration information includes transmission proportion information and/or transmitted data volume distribution information. Correspondingly, the second terminal distributes the first data based on the third configuration information.

It may be easily understood that content included in the third configuration information is similar to that included in the first configuration information. For details, refer to related descriptions of the first configuration information in S303.

Optionally, that the access network device determines the first indication information includes: The access network device determines the first indication information and the third indication information. It may be understood that a manner of determining a third indication is similar to a manner of determining the first indication information.

Optionally, the method 300 further includes step S306: The second terminal sends response information of the third indication information to the access network device, and correspondingly, the access network device receives the response information from the second terminal.

The response information of the second terminal is similar to the response information of the first terminal in step S304. For details, refer to related descriptions in step S304.

Optionally, in step S302, before the core network device sends second indication information to the access network device, the method 300 further includes:
Step S307: The core network device determines the second indication information.

For example, the core network device determines the second indication information based on second information, where the second information includes one or more of the following: quality of service information, data transmission rate information, buffer status information, channel quality information, application layer feedback information, or terminal capability information.

Optionally, the core network device determines the second indication information based on the second information and threshold information, where the threshold information includes a threshold corresponding to the second information.

Optionally, the second indication information further includes second configuration information, the second configuration information is used to determine the first terminal and/or the second terminal, and the second configuration information includes a correspondence between the first terminal and the second terminal.

Optionally, that the core network device receives response information of the second indication information from the access network device includes: receiving data from the access network device.

The access network device is a network device that currently serves the terminal. In other words, in this embodiment of this application, the network device indicates the terminal to enable or disable the aggregated transmission (for example, the access network device or the core network device determines to enable or disable the aggregated transmission), so that the terminal dynamically determines whether to enable or disable the aggregated transmission. This reduces unnecessary power consumption.

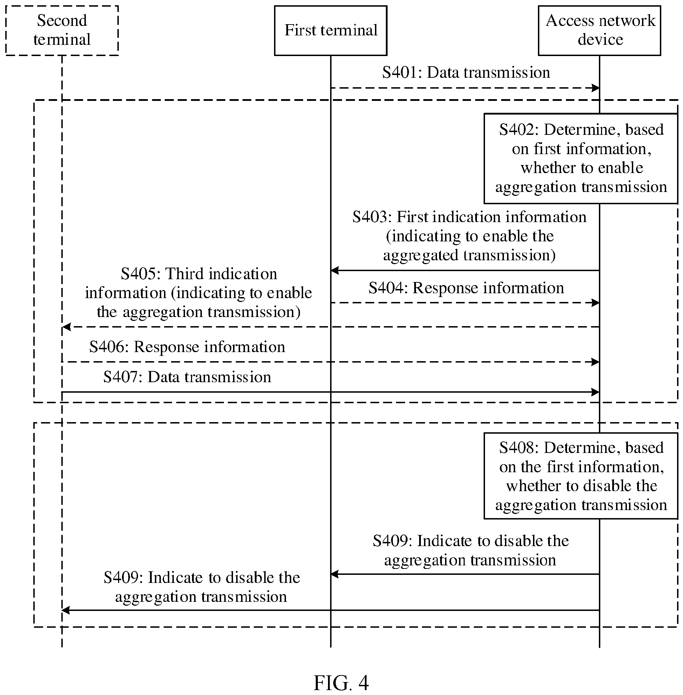

Based on the solution in FIG. 3, FIG. 4 and FIG. 5 respectively provide detailed examples of communication methods. Next, FIG. 4 is a flowchart of a communication method according to an embodiment of this application.

S401: A first terminal sends data from a service device (for example, an industrial device) to an access network device, and correspondingly, the access network device receives the data from the industrial device through the first terminal.

The industrial device is connected to the first terminal and/or a second terminal. In other words, the industrial device sends data to a network device through a terminal, for example, an access network device or a core network device. For a possible specific implementation of a connection between the industrial device and the terminal, refer to related descriptions in FIG. 2.

In a possible implementation, the industrial device is simultaneously connected to two terminals that are mutually primary and secondary terminals. When there is an uplink service, uplink data is transmitted from the industrial device to the primary terminal and the secondary terminal, and the two terminals are simultaneously triggered to initiate random access, to establish a radio resource control (radio resource control, RRC) connection. Determining of the primary/secondary terminal corresponding to the industrial device may be indicated by indication information sent by the access network device after RRC establishment is completed, or the primary/secondary terminal corresponding to the industrial device may be determined before the RRC connection is initiated, for example, the primary/secondary terminal corresponding to the industrial device is preset during deployment or determined by the core network device when the primary/secondary terminal corresponding to the industrial device registers with the core network device. In this embodiment, an example in which the first terminal is the primary terminal and the second terminal is the secondary terminal is used for description.

In a possible implementation, after the RRC connection is established, the first terminal sends data from the industrial device to the access network device, and the second terminal is in a suppressed state/inactive state, and does not send data to the access network device.

S402: The access network device determines whether to enable or disable aggregated transmission. It may also be referred to as that the access network device determines whether to send, to the first terminal, indication information that indicates whether to enable or disable the aggregated transmission.

For example, the access network device receives the data sent by the first terminal, and determines whether to enable the aggregated transmission.

In a possible manner, the access network device determines, based on first information, whether to enable aggregated transmission.

The first information includes at least one or more of the following: quality of service (quantity of service, QoS) requirement information, data transmission rate information, buffer status information, channel quality information, and UE capability information.

The QoS requirement information includes a QoS requirement of a current service of UE, and the QoS requirement may be learned by reporting by the UE, or may be indicated to the access network device through a core network device. Optionally, the QoS requirement information is QoS requirement information of a service of the industrial device corresponding to the UE. For example, when the industrial device is a camera, the QoS requirement information is related to a video.

The data transmission rate information includes a current data transmission rate of the UE, and the data transmission rate may be learned by reporting by the UE, or may be measured, counted, or calculated by the access network device.

The buffer status information includes a current buffer status of the UE, and the buffer status information may be learned by reporting by the UE.

The channel quality information includes channel quality between the UE and the access network device, and the channel quality information may be learned by reporting by the UE, or may be obtained by the access network device through measurement.

The terminal capability information includes whether the UE supports an aggregated transmission feature or function, and the UE capability may be learned by reporting by the UE, or may be indicated to the access network device through the core network device.

For example, when a service of the UE is QoS, the access network device considers that aggregated transmission needs to be enabled for the service, and the access network device determines to enable the aggregated transmission. For example, the service is a video service.

In another possible manner, the access network device determines, based on the first information and threshold information, whether to enable the aggregated transmission. For example, the access network device determines at least one threshold (or referred to as a threshold), and when a value of corresponding first information is greater than, equal to, or less than the threshold, it is considered that the aggregated transmission needs to be enabled. For example, when channel quality is less than a first threshold, the access network device determines to enable the aggregated transmission. It may be easily understood that the access network device determines whether to enable the aggregated transmission in a plurality of possible implementations, and flexible adjustment may be made based on an actual requirement. This is not limited in this embodiment of this application. Optionally, the threshold information may be predefined or preconfigured, or the threshold information is determined by the access network device, or the threshold information is determined by the core network device. The threshold information may include one or more thresholds corresponding to the one or more of information in the first information.

It may be easily understood that an execution sequence of step S401 and step S402 is not limited in this application. To be specific, a sequence of the step of determining whether to enable the aggregated transmission and the step of receiving the UE data is not limited. It may be that determining is performed before the UE data is received, or determining is performed only after the UE data is received.

In a possible manner, when determining that the aggregated transmission needs to be enabled or disabled, the access network device sends indication information to the first terminal and/or the second terminal, to indicate the aggregated transmission to be enabled or disabled.

S403: The access network device sends first indication information to first terminal to indicate to enable the aggregated transmission, and correspondingly, the first terminal receives the first indication information from the access network device.

It may be easily understood that in step S403, that the first indication information indicates to enable the aggregated transmission is used as an example, and the first indication information may alternatively indicate to disable the aggregated transmission.

Optionally, the first terminal enables or disables the aggregated transmission based on the first indication information.

Optionally, the first indication information further includes first configuration information, the first configuration information indicates a manner of distributing the first data from the industrial device into first sub-data and/or second sub-data. The first configuration information includes transmission proportion information and/or transmitted data volume distribution information. The first configuration information may also be referred to as offloading indication information. For example, the first configuration information may be an offloading rule that indicates a rule used by the two terminals to send data to the access network device. Specifically, the offloading rule indicates a quantity of data packets transmitted by each of the two terminals to the access network device. For example, each of the two terminals transmits a half, or maybe another proportion of data packets to the access network device. This is not limited. Further, the offloading rule may indicate the two terminals to separately transmit which data packets to the access network device. For example, the first terminal transmits a data packet whose sequence number is an odd number, and the second terminal transmits a data packet whose sequence number is an even number. The offloading rule may alternatively be another rule. This is not limited.

In a possible implementation, the method 400 further includes step S404: The first terminal sends response information of the first indication information to the access network device, and correspondingly, the access network device receives the response information from the first terminal. For descriptions of the response information, refer to related descriptions of step S304.

S405: The access network device sends third indication information to the second terminal to indicate to enable the aggregated transmission, and correspondingly, the second terminal receives the third indication information from the access network device.

It may be easily understood that content of the third indication information is similar to content of the first indication information. For example, the third indication information may include third configuration information, the third configuration information is used to distribute the first data into the first sub-data and/or the second sub-data, and the third configuration information includes transmission proportion information and/or transmitted data volume distribution information. For the third indication information, refer to descriptions of the first indication information. For example, the third indication information includes at least one of the following: aggregated-transmission enabling indication information, aggregated-transmission disabling indication information, information that indicates to enable or disable aggregated transmission, transmission proportion information, and transmitted data volume distribution information.

In a possible manner, the access network device notifies the first terminal and the second terminal whether to enable or disable the aggregated transmission. For example, both the first indication information and the third indication information that are respectively sent by the access network device to the first terminal and the second terminal indicate to enable the aggregated transmission, or both indicate to disable the aggregated transmission. In other words, both step S403 and step S405 are performed.

In another possible manner, the access network device notifies one of the first terminal and the second terminal whether to enable or disable the aggregated transmission. For example, the access network device sends the first indication information to the first terminal to indicate to enable the aggregated transmission. After the first terminal receives the first indication information, the first terminal sends, to the second terminal, indication information that indicates to enable the aggregated transmission. In other words, one terminal of the primary terminal and secondary terminal may forward indication information to the other terminal after receiving the indication information for enabling or disabling the aggregated transmission from the access network device. In other words, step S403 is performed, and S405 may be an optional step.

In a possible implementation, the method 400 further includes step S406: The second terminal sends response information of the third indication information to the access network device, and correspondingly, the access network device receives the response information from the second terminal. For descriptions of the response information, refer to related descriptions of step S304.

Optionally, the method 400 further includes step S407: Data transmission is performed between the first terminal and/or the second terminal and the core network device or the access network device.

For example, the first terminal and/or the second terminal send/sends data to the core network device or the access network device. When the aggregated transmission is enabled, the aggregated transmission is used to transmit the data. When the aggregated transmission is disabled, the aggregated transmission is not used.

Optionally, the method 400 further includes step S408: The access network device determines, based on the first information, whether to disable the aggregated transmission.

It may be easily understood that, after the terminal enables the aggregated transmission, the access network device determines, through a process similar to step S402, whether the aggregated transmission needs to be disabled for the terminal. The first information based on which the determining is performed is similar to the foregoing first information, and a determining rule is opposite to the foregoing rule. For example, if a value of reference information is greater than or equal to a threshold, the aggregated transmission needs to be enabled; and if a value of reference information is less than the threshold, the aggregated transmission needs to be disabled.

If the access network device determines that the aggregated transmission needs to be disabled for the terminal, the access network device sends indication information to the first terminal and/or the second terminal, to indicate to disable the aggregated transmission.

For example, the method 400 further includes step S409: The access network device sends, to the first terminal and/or the second terminal, indication information for disabling the aggregated transmission, and correspondingly, the first terminal receives the indication information.

In a possible implementation, explicit disabling indication information may be carried and sent to the first terminal to indicate to disable the aggregated transmission, or the aggregated transmission is implicitly disabled when a transmission proportion is indicated. For example, a 100% transmission proportion indication is sent to the first terminal, and a 0% transmission proportion indication is sent to the second terminal UE. In this case, the first terminal or the second terminal may learn that the aggregated transmission is disabled.

In another possible implementation, the access network device sends, to the first terminal, indication information for disabling the aggregated transmission, and the first terminal notifies the second terminal of the indication information.

According to the method, the access network device dynamically enables and disables the aggregated transmission for the terminal, so that power and electricity quantity of the terminal can be saved when the aggregated transmission does not need to be enabled.

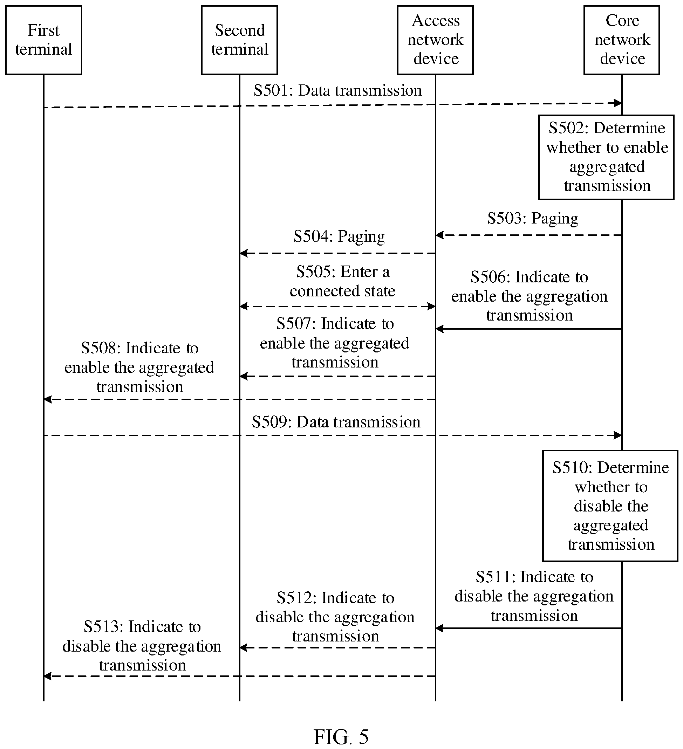

FIG. 5 shows a communication method according to an embodiment of the present invention. Compared with the embodiment shown in FIG. 4, in the embodiment shown in FIG. 5, a core network device dynamically determines whether to enable or disable aggregated transmission, so that power and electricity quantity of UE can be saved when the aggregated transmission does not need to be enabled. One or more steps in the embodiment shown in FIG. 5 may be applied separately or in combination with one or more steps in the embodiment shown in FIG. 3 or FIG. 4.

S501: Perform data transmission between a terminal and the core network device. For example, a first terminal sends data from a service device (for example, an industrial device) to the core network device, and correspondingly, the core network device receives the data from the industrial device through the first terminal.

In an implementation, the embodiment shown in FIG. 5 may be combined with the embodiment shown in FIG. 4. For example, S501 and S401 in the embodiment shown in FIG. 4 may be a same step.

S502: The core network device determines whether to enable or disable aggregated transmission. It may also be referred to as that the core network device determines whether to send, to the first terminal, indication information that indicates whether to enable or disable the aggregated transmission.

For example, the core network device receives the data sent by the first terminal, and determines whether to enable the aggregated transmission.

In a possible manner, the core network device determines, based on second information, whether to enable aggregated transmission.

The second information includes at least one or more of the following: QoS requirement information, data transmission rate information, buffer status information, channel quality information, application layer feedback information, and UE capability information.

The QoS requirement information includes a QoS requirement of a current service of UE, and the QoS requirement may be learned by reporting by the UE, or may be determined by the core network device.

The data transmission rate information includes a current data transmission rate of the UE, and the data transmission rate may be learned by reporting by the UE, or may be measured, counted, or calculated by the core network device.

The buffer status information includes a current buffer status of the UE, and the buffer status information may be learned by reporting by the UE.

The channel quality information includes channel quality between the UE and the access network device, and the channel quality information may be learned by reporting by the UE, or may be obtained by reporting by the access network device.

The application layer feedback information includes feedback information sent by an application layer to the core network device, and the core network device determines, based on the feedback information, whether a current transmission rate meets a requirement of the application layer.

The terminal capability information includes whether the UE supports an aggregated transmission feature or function, and the UE capability may be learned by reporting by the UE, or may be learned by reporting by the access network device.

For example, when a service of the UE is QoS, the core network device considers that aggregated transmission needs to be enabled for the service, and the core network device determines to enable the aggregated transmission. For example, the service is a video service. For another example, the core network device determines, based on the feedback information, that the current transmission rate does not meet the requirement of the application layer, and the core network device determines to enable the aggregated transmission.

In another possible manner, the core network device determines, based on the second information and threshold information, whether to enable the aggregated transmission. For example, the core network device determines at least one threshold (or referred to as a threshold), and when a value of corresponding second information is greater than, equal to, or less than the threshold, it is considered that the aggregated transmission needs to be enabled. It may be easily understood that the core network device determines whether to enable the aggregated transmission in a plurality of possible implementations, and flexible adjustment may be made based on an actual requirement. This is not limited in this embodiment of this application. Optionally, the threshold information may be predefined or preconfigured, or the threshold information is determined by the core network device. The threshold information may include one or more thresholds corresponding to the one or more of information in the second information.

It may be easily understood that a sequence of performing step S501 and step S502 is not limited in this application. S501 may be performed before or after S502, or step S501 and step S502 are performed simultaneously.

In a possible manner, when determining that the aggregated transmission needs to be enabled or disabled, the core network device sends indication information to the first terminal and/or the second terminal, to indicate to enable or disable the aggregated transmission.

It may be easily understood that, when the core network device needs to send a message to the terminal, if the terminal does not access the core network device, the core network device may initiate paging.

The method 500 may further include an optional step S503: The core network device pages the first terminal and/or the second terminal.

Optionally, the method may further include step S504: The access network device forwards a paging message to the first terminal and/or the second terminal.

Correspondingly, the method may further include step S505: The first terminal and/or the second terminal enter/enters a connected state.

Step S506: The core network device sends second indication information to the access network device, where the second indication information indicates to enable or disable the aggregated transmission. Accordingly, the access network device receives the second indication information from the core network device. It may be understood that the core network device indicates, through the access network device, the first terminal and/or the second terminal whether to enable or disable the aggregated transmission.

Optionally, the second indication information further includes second configuration information, the second configuration information is used to determine the first terminal and/or the second terminal, and the second configuration information includes a correspondence between the first terminal and the second terminal. For example, the second configuration information includes identifier information of the first terminal and/or that of the second terminal.

For example, in step S506, that the second indication information indicates to enable the aggregated transmission is used as an example. After the access network device receives the second indication information, the access network device sends indication information to the first terminal (S507) and/or the second terminal (S508), where the indication information indicates to enable the aggregated transmission. Optionally, the indication further indicates an offloading rule. The indication information in S507 and the indication information in S508 may be respectively same indication information as the first indication information and the third indication information in Embodiment 4. It should be noted that the indication information in S507 and the indication information in S508 indicate to enable the aggregated transmission.

Optionally, the method 500 further includes step S509: Data transmission is performed between the first terminal and/or the second terminal and the core network device or the access network device.

For example, the first terminal and/or the second terminal send/sends data to the core network device or the access network device. When the aggregated transmission is enabled, the aggregated transmission is used to transmit the data. When the aggregated transmission is disabled, the aggregated transmission is not used.

Optionally, the method 500 further includes step S510: The core network device determines whether to disable the aggregated transmission.

It may be easily understood that, after the terminal enables the aggregated transmission, the core network device determines, through a process similar to step S502, whether the aggregated transmission needs to be disabled for the terminal. The second information based on which the determining is performed is similar to the foregoing second information, and a determining rule is opposite to the foregoing rule. For example, if a value of reference information is greater than or equal to a threshold, the aggregated transmission needs to be enabled; and if a value of reference information is less than the threshold, the aggregated transmission needs to be disabled.

If the core network device determines that the aggregated transmission needs to be disabled for the terminal, the core network device sends (S511) indication information to the access network device to indicate to disable the aggregated transmission. Correspondingly, after receiving the indication information, the access network device sends indication information (S513) to the first terminal (S512) and/or the second terminal, to indicate to disable the aggregated transmission. In an implementation, after the aggregated transmission is disabled, the access network device may release the second terminal to an idle state or an inactive state.

It may be easily understood that, when step S513 is not performed, the method 500 further includes: After the first terminal receives the indication information for disabling the aggregated transmission in step S512, the first terminal sends, to the second terminal, indication information for disabling the aggregated transmission. Similarly, when S512 is not performed, after the second terminal receives the indication information that indicates to disable the aggregated transmission in step S512, the second terminal sends, to the first terminal, indication information for disabling aggregated transmission.

According to the method, the core network device dynamically enables and disables the aggregated transmission, so that power and electricity quantity of the UE can be saved when the aggregated transmission does not need to be enabled.

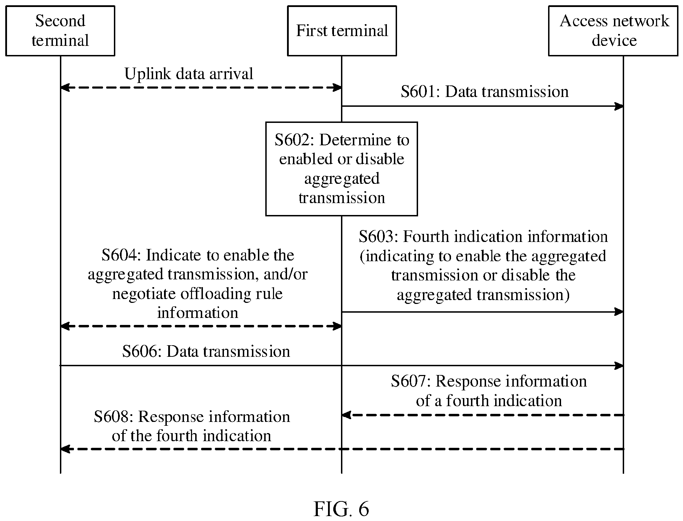

FIG. 6 shows a communication method according to an embodiment of the present invention. In the embodiment shown in FIG. 6, a terminal dynamically determines whether to enable or disable aggregated transmission, so that power and electricity quantity of the terminal can be saved when the aggregated transmission does not need to be enabled.

S601: A first terminal sends data from a service device (for example, an industrial device) to an access network device, and correspondingly, the access network device receives the data from the industrial device through the first terminal.

In an implementation, the embodiment shown in FIG. 6 may be combined with the embodiment shown in FIG. 4. For example, S601 and S401 in the embodiment shown in FIG. 4 may be a same step. For details, refer to related descriptions in step S401.

S602: The first terminal determines to enable or disable aggregated transmission.

It may also be referred to as that the first terminal determines fourth indication information, where the fourth indication information indicates to enable or disable the aggregated transmission.

In a possible manner, the first terminal determines, based on third information, whether to enable the aggregated transmission.

The third information includes at least one of the following: quality of service requirement information, data transmission rate information, buffer status information, channel quality information, and UE capability information.

The QoS requirement information includes a QoS requirement of a service. Optionally, the QoS requirement information is QoS requirement information of a service of the industrial device corresponding to the first terminal and/or the second terminal. For example, when the industrial device is a camera, the QoS requirement information is related to a video.

The data transmission rate information includes a data transmission rate of a service of the first terminal and/or a data transmission rate of a service of a second terminal.

The buffer status information includes a buffer status of the first terminal and/or that of the second terminal.

The channel quality information includes channel quality between the first terminal and the access network device and/or channel quality between the second terminal and the access network device.

The terminal capability information includes whether the terminal supports an aggregated transmission feature or function.

It may be easily understood that the third information is third information corresponding to the first terminal and/or third information corresponding to the second terminal. For example, the QoS requirement information includes a QoS requirement of a service of the first terminal and/or a QoS requirement of a service of the second terminal.

The first terminal may determine or obtain one or more types of the third information in a plurality of possible manners.

In a possible manner, the first terminal obtains one or more types of the third information through measurement, statistics collection, or calculation. For example, the first terminal obtains the data transmission rate information, the buffer status information, and the channel quality information through measurement.

In another possible manner, the first terminal obtains one or more types of the third information through another device (for example, the second terminal, the access network device, or the core network device). For example, the first terminal learns, from an indication of the access network device, the channel quality information between the first terminal and the access network device. For another example, the first terminal obtains the QoS requirement information through the core network device. For another example, the first terminal obtains, through the second terminal, information about a terminal capability supported by the second terminal.

In still another possible manner, one or more types of information, for example, information about a terminal capability supported by the first terminal, in the third information is possessed by the first terminal.

For example, when a service is QoS, for example, the service is a video service, the first terminal considers that aggregated transmission needs to be enabled for the service, and the first terminal determines to enable the aggregated transmission.

In yet still another possible manner, the first terminal determines, based on the third information and threshold information, whether to enable the aggregated transmission. For example, the first terminal determines at least one threshold (or referred to as a threshold), and when a value of corresponding third information is greater than, equal to, or less than the threshold, it is considered that the aggregated transmission needs to be enabled. It may be easily understood that the first terminal determines whether to enable the aggregated transmission in a plurality of possible implementations, and flexible adjustment may be made based on an actual requirement. This is not limited in this embodiment of this application. Optionally, the threshold information may be predefined or preconfigured, or the threshold information is determined by the first terminal or the access network device, or the threshold information is determined by the core network device. The threshold information may include one or more thresholds corresponding to the one or more of information in the third information.

It may be easily understood that an execution sequence of step S601 and step S602 is not limited in this application. To be specific, a sequence of the step of determining whether to enable the aggregated transmission and the step of transmitting data is not limited. Optionally, step S601 does not need to be used as a premise for S602, and instead, S602 is actively initiated by the first terminal. For example, when the first terminal determines that there is to-be-transmitted data, the first terminal determines whether to enable the aggregated transmission, which is not limited to performing determining after data is transmitted to the access network device. In other words, step S601 is an optional step.

S603: The first terminal sends fourth indication information to the access network device, where the fourth indication information indicates to enable the aggregated transmission or indicates to disable the aggregated transmission; and correspondingly, the access network device receives the fourth indication information from the first terminal. Optionally, the access network device enables or disables the aggregated transmission based on the fourth indication information.

Optionally, the method 600 further includes S604: The first terminal sends fifth indication information to the second terminal, where the fifth indication information indicates to enable the aggregated transmission or indicates to disable the aggregated transmission; and correspondingly, the second terminal receives the fifth indication information from the first terminal. Optionally, the second terminal enables or disables the aggregated transmission based on the fifth indication information. In other words, after the first terminal determines to enable the aggregated transmission or determines to disable the aggregated transmission, the first terminal notifies the second terminal. Optionally, configuration information used to configure distribution of data in the aggregated transmission may be determined through interaction between the first terminal and the second terminal. For example, the configuration information is determined based on one or more of the following information corresponding to the first terminal and/or the second terminal: transmit power information, power headroom report (power headroom report, PHR) information, channel quality information, and traffic control information. Optionally, the access network device updates or adjusts the configuration information used to configure distribution of data in the aggregated transmission. For example, the access network device updates the configuration information based on the first information.

Optionally, the method 600 further includes step S605: Data transmission is performed between the first terminal and/or the second terminal and the core network device or the access network device. For example, the first terminal and/or the second terminal send/sends data to the core network device or the access network device. When the aggregated transmission is enabled, the aggregated transmission is used to transmit the data. When the aggregated transmission is disabled, the aggregated transmission is not used.

Optionally, the method 600 further includes: The access network device sends response information of the fourth indication information to the first terminal (S606) and/or the second terminal (S607). Correspondingly, the first terminal and/or the second terminal receive/receives the response information of the fourth indication information from the access network device.

It may be easily understood that the response information of the fourth indication information may also be referred to as configuration information, or the response to the fourth indication information is not a prerequisite. For example, the configuration information is predefined or preconfigured. In other words, the access network device may preconfigure a transmission proportion or a transmission quantity. Alternatively, the configuration information and the response information that are used to distribute data transmitted by the first terminal and/or the second terminal may be sent in one or more messages.

For example, sending the response information of the fourth indication information to the first terminal includes: sending fourth configuration information (fourth sub-indication information, where an example in which the fourth sub-indication information is fourth configuration information is used for description) to the first terminal, where the fourth configuration information indicates a manner of distributing first data into first sub-data and second sub-data, and the fourth configuration information includes transmission proportion information and/or transmitted data volume distribution information.

For another example, sending the response information of the fourth indication information to the second terminal includes: sending fifth configuration information to the second terminal, where the fifth configuration information is used to distribute first data into first sub-data and second sub-data, and the fifth configuration information includes transmission proportion information and/or transmitted data volume distribution information.

For another example, sending the response information of the fourth indication information to the second terminal includes: sending, to the second terminal, indication information for enabling or disabling the aggregated transmission.

It may be easily understood that an interaction process in which the first terminal indicates another device (for example, the second terminal or the access network device) to enable or disable the aggregated transmission is not limited. For example, in an implementation, if the first terminal determines that the aggregated transmission needs to be enabled (enabling the aggregated transmission is used as an example), the first terminal sends indication information to the access network device (S603), to indicate to enable the aggregated transmission. After receiving the indication information, the access network device sends indication information to the second terminal (S607), to indicate to enable the aggregated transmission. In another implementation, the first terminal first notifies the second terminal (S604), and the second terminal notifies the access network device, to indicate to enable the aggregated transmission. In still another implementation, the first terminal notifies the access network device (S603) and the second terminal (S604), to indicate to enable the aggregated transmission. Similarly, after the first terminal, the second terminal, or the access network device determines a data distribution rule, a similar interaction procedure may alternatively be used.

It may be easily understood that, in this embodiment of this application, a connection needs to be first established for interaction between the first terminal and the second terminal. Time of establishing the connection may be after or before aggregated-transmission enabling indication information is received, and this is not limited. The first terminal and the second terminal may establish a connection through a wired connection or a wireless connection, for example, a sidelink (sidelink), Bluetooth, or Wi-Fi. A connection (for example, an RRC connection) between the first terminal and/or the second terminal and the access network device may be established when there is a communication requirement with the access network device, or may be established in advance. This is not limited.

According to the method, the terminal dynamically enables and disables the aggregated transmission, so that power and electricity quantity of the UE can be saved when the aggregated transmission does not need to be enabled. It may be easily understood that, in this embodiment of this application, that the first terminal determines to enable or disable the aggregated transmission is used as an example. A manner of dynamically performing determining by the second terminal is similar to a manner of dynamically performing determining by the first terminal.

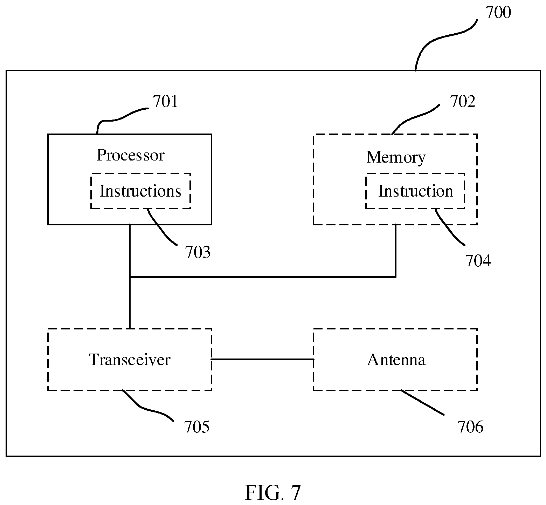

FIG. 7 is a diagram of a structure of a communication apparatus according to an embodiment of this application. The communication apparatus 700 may be the communication apparatus 30 in FIG. 1, or may be the terminal device in FIG. 2, and is configured to implement the method for the terminal device in the foregoing method embodiments. Alternatively, the communication apparatus may be the network device (for example, the access network device or the core network device) in FIG. 2, or a network device in a RAN, for example, a CU, a DU, a CU-CP, or a CU-UP, and is configured to implement the method corresponding to a first network device or a second network device in the foregoing method embodiments. For a specific function, refer to the descriptions in the foregoing method embodiments.

The communication apparatus 700 includes one or more processors 701. The processor 701 may also be referred to as a processing unit, and may implement a specific control function. The processor 701 may be a general-purpose processor or a special purpose processor or the like. For example, the processor 701 includes a baseband processor, a central processing unit, an application processor, a modem processor, a graphics processor, an image signal processor, a digital signal processor, a video codec processor, a controller, a memory, and/or a neural network processor. The baseband processor may be configured to process a communication protocol and communication data. The central processing unit may be configured to control the communication apparatus 700, perform a software program, and/or process data. Different processors may be independent components, or may be integrated into one or more processors, for example, integrated into one or more application-specific integrated circuits.

Optionally, the communication apparatus 700 includes one or more memories 702, configured to store instructions 704, and the instructions may be run on the processor, so that the terminal device 700 performs the method described in the foregoing method embodiments. Optionally, the memory 702 may also store data. The processor and the memory may be separately disposed, or may be integrated together.

Optionally, the communication apparatus 701 may include instructions 703 (sometimes referred to as code or a program), and the instructions 703 may be run on the processor, to enable the communication apparatus 700 to perform the method described in the foregoing embodiment. The processor 701 may store data.

Optionally, the communication apparatus 700 may further include a transceiver 705 and an antenna 706. The transceiver 705 may be referred to as a transceiver unit, a transceiver device, a transceiver circuit, a transceiver, an input/output interface, or the like, and is configured to implement a transceiver function of the communication apparatus 700 through the antenna 706.

Optionally, the communication apparatus 700 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a radar, a camera, a display, or the like. It may be understood that, in some embodiments, UE 700 may include more or fewer components, or integrate some components, or split some components. These components may be implemented by hardware, software, or a combination of software and hardware.

The processor 701 and the transceiver 705 described in this application may be implemented on an integrated circuit (integrated circuit, IC), an analog IC, a radio frequency integrated circuit (radio frequency identification, RFID), a mixed-signal IC, an application-specific integrated circuit (application-specific integrated circuit, ASIC), a printed circuit board (printed circuit board, PCB), an electronic device, or the like. The communication apparatus described in this specification may be implemented by an independent device (for example, an independent integrated circuit or a mobile phone), or may be a part of a large device (for example, a module that may be embedded in another device). For details, refer to the foregoing descriptions about the terminal device and the network device. Details are not described herein again.

An embodiment of this application provides a terminal device. The terminal device (referred to as UE for ease of description) may be used in the foregoing embodiments. The terminal device includes a corresponding means (means), unit, and/or circuit for implementing functions of the UE in the foregoing embodiments. For example, the terminal device includes a transceiver module, configured to support the terminal device in implementing a receiving and sending function; and a processing module, configured to support the terminal device in processing a signal.

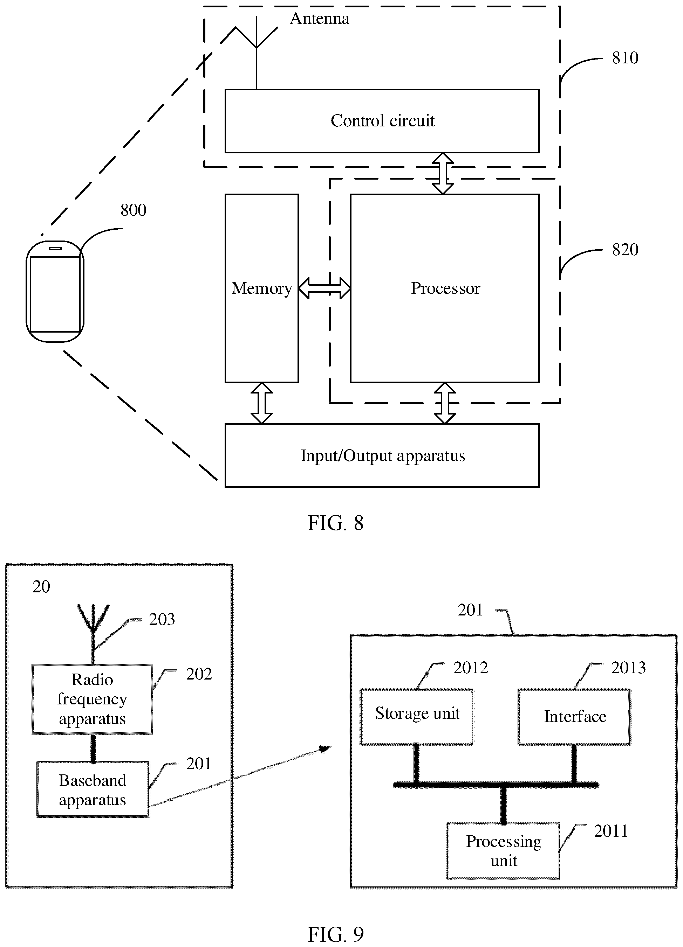

FIG. 8 is a diagram of a structure of a terminal device according to an embodiment of this application.

The terminal device 800 may be applicable to the system shown in FIG. 1 or FIG. 2. For ease of description, FIG. 8 shows only main components of the terminal device 800. As shown in FIG. 8, the terminal device 800 includes a processor, a memory, a control circuit, an antenna, and an input/output apparatus. The processor is mainly configured to: process a communication protocol and communication data, control the entire terminal device 800, execute a software program, and process data of the software program. The memory is mainly configured to store the software program and data. The control circuit is mainly configured to convert a baseband signal and a radio frequency signal and process the radio frequency signal. The antenna is mainly configured to receive and send a radio frequency signal in a form of an electromagnetic wave. The input/output apparatus, for example, a touchscreen, a display, a microphone, or a keyboard, is mainly configured to receive data input by a user and output data to the user.

For example, the terminal device 800 is a mobile phone. After the terminal device 800 is powered on, the processor may read a software program in a storage unit, explain and execute instructions of the software program, and process data of the software program. When data needs to be sent wirelessly, after performing baseband processing on the to-be-sent data, the processor outputs a baseband signal to the control circuit, and after performing radio frequency processing on the baseband signal, the control circuit sends a radio frequency signal in a form of an electromagnetic wave through the antenna. When data is sent to the terminal device 800, the control circuit receives a radio frequency signal through the antenna, converts the radio frequency signal into a baseband signal, and outputs the baseband signal to the processor. The processor converts the baseband signal into data, and processes the data.

A person skilled in the art may understand that, for ease of description, FIG. 8 shows only one memory and one processor. In some embodiments, the terminal device 800 may include a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to: control the entire terminal device 800, execute the software program, and process the data of the software program. The processor in FIG. 8 integrates functions of the baseband processor and the central processing unit. A person skilled in the art may understand that the baseband processor and the central processing unit may alternatively be independent processors, and are interconnected by using a technology such as a bus. In addition, the terminal device 800 may include a plurality of baseband processors to adapt to different network standards, and the terminal device 800 may include a plurality of central processing units to enhance a processing capability of the terminal device 800. Components of the terminal device 800 may be connected through various buses. The baseband processor may also be expressed as a baseband processing circuit or a baseband processing chip. The central processing unit may alternatively be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have sending and receiving functions may be considered as a transceiver unit 810 of the terminal device 800, and the processor having a processing function may be considered as a processing unit 820 of the terminal device 800. As shown in FIG. 8, the terminal device 800 includes the transceiver unit 810 and the processing unit 820. The transceiver unit may also be referred to as a transceiver, a transceiver machine, a transceiver apparatus, or the like. Optionally, a component configured to implement the receiving function in the transceiver unit 810 may be considered as a receiving unit, and a component configured to implement the sending function in the transceiver unit 810 may be considered as a sending unit. That is, the transceiver unit 810 includes the receiving unit and the sending unit. For example, the receiving unit may also be referred to as a receiver, a receive machine, or a receiving circuit, and the sending unit may also be referred to as a transmitter, a transmit machine, or a transmitting circuit.

An embodiment of this application further provides a network device. The network device may be used in the foregoing embodiments. The network device includes a means (means), a unit, and/or a circuit for implementing a function of the access network device or the core network device in the foregoing embodiments. For example, the network device includes a transceiver module, configured to support the network device in implementing a receiving and sending function; and a processing module, configured to support the network device in processing a signal.

FIG. 9 is a diagram of a structure of a network device according to an embodiment of this application. As shown in FIG. 9, a network device 20 may be applied to the systems shown in FIG. 1 and FIG. 2. The network device 20 may serve as an access network device to have a function of the access network device relative to one or some UEs, or may serve as a core network device to have a function of the core network device relative to one or some UEs. The network device includes a baseband apparatus 201, a radio frequency apparatus 202, and an antenna 203. In an uplink direction, the radio frequency apparatus 202 receives, via the antenna 203, information sent by a terminal device, and sends, to the baseband apparatus 201, the information sent by the terminal device for processing. In a downlink direction, the baseband apparatus 201 processes information of the terminal device and sends the information to the radio frequency apparatus 202, and the radio frequency apparatus 202 processes the information of the terminal device and then sends the information to the terminal device via the antenna 201.

The baseband apparatus 201 includes one or more processing units 2011, a storage unit 2012, and an interface 2013. The processing unit 2011 is configured to support the network device in performing functions of the network device in the foregoing method embodiments. The storage unit 2012 is configured to store a software program and/or data. The interface 2013 is configured to exchange information with the radio frequency apparatus 202. The interface includes an interface circuit, configured to input and output information. In an implementation, the processing unit is an integrated circuit, for example, one or more ASICs, one or more DSPs, one or more FPGAs, or a combination of these integrated circuits. These integrated circuits may be integrated together to form a chip. The storage unit 2012 and the processing unit 2011 may be located in a same chip, that is, an on-chip storage element. Alternatively, the storage unit 2012 and the processing unit 2011 may be on a different chip from the processing unit 2011, that is, an off-chip storage element. The storage unit 2012 may be one memory, or may be a collective name of a plurality of memories or storage elements.

The network device may implement some or all of the steps in the foregoing method embodiments in a form of scheduling a program by using one or more processing units. For example, the network device implements a corresponding function of the network device in the foregoing embodiments. The one or more processing units may support radio access technologies of a same standard, or may support radio access technologies of different standards.

This application further provides a computer-readable storage medium. The computer-readable storage medium stores a computer program. When the computer program is executed by a computer, a function in any one of the foregoing method embodiments is implemented.

This application further provides a computer program product. The computer product includes a computer program (which may also be referred to as code or instructions). When the computer program product is executed by a computer, a function of any one of the foregoing method embodiments is implemented.

A person of ordinary skill in the art may understand that, for the purpose of convenient and brief description, for a detailed working process of the foregoing system, apparatuses, and units, refer to a corresponding process in the foregoing method embodiment. Details are not described herein again.

It may be understood that, in some scenarios, some optional features in embodiments of this application may be independently implemented without depending on another feature, for example, a solution on which the optional features are currently based, to resolve a corresponding technical problem and achieve a corresponding effect. Alternatively, in some scenarios, the optional features are combined with other features based on requirements. Correspondingly, the apparatus provided in embodiments of this application may also correspondingly implement these features or functions. Details are not described herein.

A person of ordinary skill in the art may be aware that, in combination with the examples described in embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In the several embodiments provided in this application, it should be understood that the disclosed system, apparatus, and method may be implemented in other manners. For example, the described apparatus embodiment is merely an example. For example, division into units is merely logical function division. Units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The computer-readable storage medium may be any usable medium that can be accessed by a computer. For example, the computer-readable medium may include but is not limited to a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read only memory, EEPROM), a compact disc read-only memory (compact disc read-only memory, CD-ROM), a universal serial bus flash disk (universal serial bus flash disk), a removable hard disk, another optical disc memory, a magnetic disk storage medium, another magnetic storage device, or any other medium that can be used to carry or store expected program code in a form of an instruction or a data structure and that can be accessed by a computer. In addition, through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synclink dynamic random access memory (synchlink DRAM, SLDRAM), and a direct rambus random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, comprising:
receiving first indication information from an access network device, wherein the first indication information indicates to enable aggregated transmission or indicates to disable the aggregated transmission, the aggregated transmission comprises first data transmission that is performed with the access network device through a first terminal and a second terminal, first data comprises first sub-data and second sub-data, the first sub-data is transmitted to the access network device through the first terminal, and the second sub-data is transmitted to the access network device through the second terminal; and
enabling or disabling the aggregated transmission based on the first indication information.

2. The method according to claim 1, wherein the first indication information further comprises first sub-indication information, and the first sub-indication information indicates a manner of distributing the first data into the first sub-data and/or the second sub-data.

3. The method according to claim 1 or 2, wherein the first indication information comprises at least one of the following: aggregated-transmission enabling indication information, aggregated-transmission disabling indication information, information that indicates to enable or disable aggregated transmission, transmission proportion information, and transmitted data volume distribution information.

4. The method according to any one of claims 1 to 3, wherein the method further comprises:
sending the second sub-data to the second terminal.

5. The method according to any one of claims 1 to 4, wherein the method further comprises sending response information of the first indication information to the access network device.

6. A communication method, comprising:
sending first indication information to a first terminal, wherein the first indication information indicates to enable aggregated transmission or indicates to disable the aggregated transmission, the aggregated transmission comprises first data transmission that is performed with an access network device through the first terminal and a second terminal, first data comprises first sub-data and second sub-data, the first sub-data is transmitted to the access network device through the first terminal, and the second sub-data is transmitted to the access network device through the second terminal; and
receiving response information of the first indication information from the first terminal.

7. The method according to claim 6, wherein the method further comprises:
determining the first indication information based on first information, wherein the first information comprises one or more of the following: quality of service information, data transmission rate information, buffer status information, channel quality information, or terminal capability information.

8. The method according to claim 7, wherein the determining the first indication information based on first information comprises:
determining the first indication information based on the first information and threshold information corresponding to the first information.

9. The method according to claim 6, wherein the method further comprises:
receiving second indication information from a core network device, wherein the second indication information indicates to enable the aggregated transmission or indicates to disable the aggregated transmission; and
determining the first indication information based on the second indication information.

10. The method according to any one of claims 6 to 9, wherein the first indication information further comprises first sub-indication information, and the first sub-indication information indicates a manner of distributing the first data into the first sub-data and the second sub-data.

11. The method according to any one of claims 6 to 10, wherein the method further comprises:
sending third indication information to the second terminal, wherein the third indication information indicates to enable the aggregated transmission, or indicates to disable the aggregated transmission.

12. The method according to claim 11, wherein the third indication information further comprises third sub-indication information, and the third sub-indication information indicates a manner of distributing the first data into the first sub-data and/or the second sub-data.

13. The method according to claim 11 or 12, wherein the third indication information comprises at least one of the following: aggregated-transmission enabling indication information, aggregated-transmission disabling indication information, information that indicates to enable or disable aggregated transmission, transmission proportion information, and transmitted data volume distribution information.

14. The method according to any one of claims 11 to 13, wherein the determining the first indication information comprises:
determining the first indication information and the third indication information.

15. A communication method, comprising:
sending second indication information to an access network device, wherein the second indication information indicates to enable aggregated transmission or indicates to disable the aggregated transmission, the aggregated transmission comprises first data transmission that is performed with the access network device through a first terminal and a second terminal, first data comprises first sub-data and second sub-data, the first sub-data is transmitted to the access network device through the first terminal, and the second sub-data is transmitted to the access network device through the second terminal; and
receiving response information of the second indication information from the access network device.

16. The method according to claim 15, wherein the second indication information comprises at least one of the following: aggregated-transmission enabling indication information, aggregated-transmission disabling indication information, information that indicates to enable or disable aggregated transmission, transmission proportion information, and transmitted data volume distribution information.

17. The method according to claim 15 or 16, wherein the method further comprises:
determining the second indication information based on second information, wherein the second information comprises one or more of the following: quality of service information, data transmission rate information, buffer status information, channel quality information, application layer feedback information, or terminal capability information.

18. The method according to claim 17, wherein the determining the second indication information based on second information comprises:
determining the second indication information based on the second information and threshold information, wherein the threshold information comprises a threshold corresponding to the second information.

19. The method according to any one of claims 15 to 18, wherein the second indication information further comprises second sub-indication information, the second sub-indication information is used to determine the first terminal and/or the second terminal, and the second sub-indication information comprises a correspondence between the first terminal and the second terminal.

20. A communication method, comprising:
sending fourth indication information to an access network device, wherein the fourth indication information indicates to enable aggregated transmission or indicates to disable the aggregated transmission, the aggregated transmission comprises first data transmission that is performed with the access network device through a first terminal and a second terminal, first data comprises first sub-data and second sub-data, the first sub-data is transmitted to the access network device through the first terminal, and the second sub-data is transmitted to the access network device through the second terminal; and
receiving response information that is of the fourth indication information and that is sent by the access network device.

21. The method according to claim 20, wherein the fourth indication information comprises at least one of the following: aggregated-transmission enabling indication information, aggregated-transmission disabling indication information, information that indicates to enable or disable aggregated transmission, transmission proportion information, and transmitted data volume distribution information.

22. The method according to claim 20 or 21, wherein the method further comprises:
determining the fourth indication information based on third information, wherein the third information comprises one or more of the following: quality of service information, data transmission rate information, buffer status information, channel quality information, or terminal capability information.

23. The method according to any one of claims 20 to 22, wherein the method further comprises: determining fourth sub-indication information, wherein the fourth sub-indication information indicates a manner of distributing the first data into the first sub-data and the second sub-data.

24. The method according to claim 23, wherein the determining fourth sub-indication information comprises: response information of the fourth indication information comprises the fourth sub-indication information.

25. The method according to claim 23, wherein the determining fourth sub-indication information comprises:
determining the fourth sub-indication information based on one or more of transmit power information, power headroom report information, channel quality information, and traffic control information corresponding to the first terminal and/or the second terminal.

26. The method according to any one of claims 20 to 25, wherein the method further comprises:
sending fifth indication information to the second terminal, wherein the fifth indication information indicates to enable the aggregated transmission, or indicates to disable the aggregated transmission.

27. A communication method, comprising:
receiving fifth indication information from a first terminal, wherein the fifth indication information indicates to enable aggregated transmission or indicates to disable the aggregated transmission, the aggregated transmission comprises first data transmission that is performed with an access network device through the first terminal and a second terminal, first data comprises first sub-data and second sub-data, the first sub-data is transmitted to the access network device through the first terminal, and the second sub-data is transmitted to the access network device through the second terminal; and
enabling or disabling the aggregated transmission based on the fifth indication information.

28. The method according to claim 27, wherein the method further comprises: determining fifth sub-indication information, wherein the fifth sub-indication information indicates a manner of distributing the first data into the first sub-data and the second sub-data.

29. The method according to claim 28, wherein the determining fifth sub-indication information comprises:
the fifth indication information comprises the fifth sub-indication information, and the fifth sub-indication information indicates the manner of distributing the first data into the first sub-data and/or the second sub-data.

30. The method according to claim 28, wherein the determining fifth sub-indication information comprises:
receiving the fifth sub-indication information from the access network device.

31. A communication method, comprising:
receiving fourth indication information from a first terminal, wherein the fourth indication information indicates to enable aggregated transmission or indicates to disable the aggregated transmission, the aggregated transmission comprises first data transmission that is performed with an access network device through the first terminal and a second terminal, first data comprises first sub-data and second sub-data, the first sub-data is transmitted to the access network device through the first terminal, and the second sub-data is transmitted to the access network device through the second terminal; and
sending response information of the fourth indication information to the first terminal.

32. The method according to claim 31, wherein the sending response information of the fourth indication information to the first terminal comprises:
sending fourth sub-indication information to the first terminal, wherein the fourth sub-indication information indicates a manner of distributing the first data into the first sub-data and the second sub-data.

33. The method according to claim 31 or 32, wherein the method further comprises:
sending fifth sub-indication information to the second terminal, wherein the fifth sub-indication information indicates a manner of distributing the first data into the first sub-data and the second sub-data.

34. A communication apparatus, comprising:
a transceiver unit, configured to receive first indication information from an access network device, wherein the first indication information indicates to enable aggregated transmission or indicates to disable the aggregated transmission, the aggregated transmission comprises first data transmission that is performed with the access network device through a first terminal and a second terminal, first data comprises first sub-data and second sub-data, the first sub-data is transmitted to the access network device through the first terminal, and the second sub-data is transmitted to the access network device through the second terminal; and
a processing unit, configured to enable or disable the aggregated transmission based on the first indication information.

35. The apparatus according to claim 34, wherein the first indication information further comprises first sub-indication information, and the first sub-indication information indicates a manner of distributing the first data into the first sub-data and/or the second sub-data.

36. The apparatus according to claim 34 or 35, wherein the first indication information comprises at least one of the following: aggregated-transmission enabling indication information, aggregated-transmission disabling indication information, information that indicates to enable or disable aggregated transmission, transmission proportion information, and transmitted data volume distribution information.

37. The apparatus according to any one of claims 34 to 36, wherein the transceiver unit is further configured to send the second sub-data to the second terminal.

38. The apparatus according to any one of claims 34 to 37, wherein the transceiver unit is further configured to send response information of the first indication information to the access network device.

39. A communication apparatus, comprising:
a transceiver unit, configured to send first indication information to a first terminal, wherein the first indication information indicates to enable aggregated transmission or indicates to disable the aggregated transmission, the aggregated transmission comprises first data transmission that is performed with an access network device through the first terminal and a second terminal, first data comprises first sub-data and second sub-data, the first sub-data is transmitted to the access network device through the first terminal, and the second sub-data is transmitted to the access network device through the second terminal; and
the transceiver unit is further configured to receive response information of the first indication information from the first terminal.

40. The apparatus according to claim 39, wherein the apparatus further comprises:
a processing unit, configured to determine the first indication information based on first information, wherein the first information comprises one or more of the following: quality of service information, data transmission rate information, buffer status information, channel quality information, or terminal capability information.

41. The apparatus according to claim 40, wherein when determining the first indication information based on the first information, the processing unit is specifically configured to:
determine the first indication information based on the first information and threshold information corresponding to the first information.

42. The apparatus according to claim 39, wherein the transceiver unit is further configured to receive second indication information from a core network device, wherein the second indication information indicates to enable the aggregated transmission or indicates to disable the aggregated transmission; and
the processing unit is further configured to determine the first indication information based on the second indication information.

43. The apparatus according to any one of claims 39 to 42, wherein the first indication information further comprises first sub-indication information, and the first sub-indication information indicates a manner of distributing the first data into the first sub-data and the second sub-data.

44. The apparatus according to any one of claims 39 to 43, wherein the transceiver unit is further configured to send third indication information to the second terminal, wherein the third indication information indicates to enable the aggregated transmission, or indicates to disable the aggregated transmission.

45. The apparatus according to claim 44, wherein the third indication information further comprises third sub-indication information, and the third sub-indication information indicates a manner of distributing the first data into the first sub-data and/or the second sub-data.

46. The apparatus according to claim 44 or 45, wherein the third indication information comprises at least one of the following: aggregated-transmission enabling indication information, aggregated-transmission disabling indication information, information that indicates to enable or disable aggregated transmission, transmission proportion information, and transmitted data volume distribution information.

47. The apparatus according to any one of claims 44 to 46, wherein when determining the first indication information, the processing unit is specifically configured to determine the first indication information and the third indication information.

48. A communication apparatus, comprising:
a transceiver unit, configured to send second indication information to an access network device, wherein the second indication information indicates to enable aggregated transmission or indicates to disable the aggregated transmission, the aggregated transmission comprises first data transmission that is performed with the access network device through a first terminal and a second terminal, first data comprises first sub-data and second sub-data, the first sub-data is transmitted to the access network device through the first terminal, and the second sub-data is transmitted to the access network device through the second terminal; and
the transceiver unit is further configured to receive response information of the second indication information from the access network device.

49. The apparatus according to claim 48, wherein the second indication information comprises at least one of the following: aggregated-transmission enabling indication information, aggregated-transmission disabling indication information, information that indicates to enable or disable aggregated transmission, transmission proportion information, and transmitted data volume distribution information.

50. The apparatus according to claim 48 or 49, wherein the apparatus further comprises:
a processing unit, configured to determine the second indication information based on second information, wherein the second information comprises one or more of the following: quality of service information, data transmission rate information, buffer status information, channel quality information, application layer feedback information, or terminal capability information.

51. The apparatus according to claim 50, wherein when determining the second indication information based on the second information, the processing unit is specifically configured to:
determine the second indication information based on the second information and threshold information, wherein the threshold information comprises a threshold corresponding to the second information.

52. The apparatus according to any one of claims 48 to 51, wherein the second indication information further comprises second sub-indication information, the second sub-indication information is used to determine the first terminal and/or the second terminal, and the second sub-indication information comprises a correspondence between the first terminal and the second terminal.

53. A communication apparatus, comprising:
a transceiver unit, configured to send fourth indication information to an access network device, wherein the fourth indication information indicates to enable aggregated transmission or indicates to disable the aggregated transmission, the aggregated transmission comprises first data transmission that is performed with the access network device through a first terminal and a second terminal, first data comprises first sub-data and second sub-data, the first sub-data is transmitted to the access network device through the first terminal, and the second sub-data is transmitted to the access network device through the second terminal; and
the transceiver unit is further configured to receive response information that is of the fourth indication information and that is sent by the access network device.

54. The apparatus according to claim 53, wherein the fourth indication information comprises at least one of the following: aggregated-transmission enabling indication information, aggregated-transmission disabling indication information, information that indicates to enable or disable aggregated transmission, transmission proportion information, and transmitted data volume distribution information.

55. The apparatus according to claim 53 or 54, wherein the apparatus further comprises:
a processing unit, configured to determine the fourth indication information based on third information, wherein the third information comprises one or more of the following: quality of service information, data transmission rate information, buffer status information, channel quality information, or terminal capability information.

56. The apparatus according to any one of claims 53 to 55, wherein the processing unit is further configured to determine fourth sub-indication information, wherein the fourth sub-indication information indicates a manner of distributing the first data into the first sub-data and the second sub-data.

57. The apparatus according to claim 56, wherein the determining fourth sub-indication information comprises: the response information of the fourth indication information comprises the fourth sub-indication information.

58. The apparatus according to claim 56, wherein the determining fourth sub-indication information comprises: determining the fourth sub-indication information based on one or more of transmit power information, power headroom report information, channel quality information, and traffic control information corresponding to the first terminal and/or the second terminal.

59. The apparatus according to any one of claims 53 to 58, wherein the transceiver unit is further configured to send fifth indication information to the second terminal, wherein the fifth indication information indicates to enable the aggregated transmission, or indicates to disable the aggregated transmission.

60. A communication apparatus, comprising:
a transceiver unit, configured to receive fifth indication information from a first terminal, wherein the fifth indication information indicates to enable aggregated transmission or indicates to disable the aggregated transmission, the aggregated transmission comprises first data transmission that is performed with an access network device through the first terminal and a second terminal, first data comprises first sub-data and second sub-data, the first sub-data is transmitted to the access network device through the first terminal, and the second sub-data is transmitted to the access network device through the second terminal; and
a processing unit, configured to enable or disable the aggregated transmission based on the fifth indication information.

61. The apparatus according to claim 60, wherein the processing unit is further configured to determine fifth sub-indication information, wherein the fifth sub-indication information indicates a manner of distributing the first data into the first sub-data and the second sub-data.

62. The apparatus according to claim 61, wherein the fifth indication information comprises the fifth sub-indication information, and the fifth sub-indication information indicates the manner of distributing the first data into the first sub-data and/or the second sub-data.

63. The apparatus according to claim 61, wherein the transceiver unit is further configured to receive the fifth sub-indication information from the access network device.

64. A communication apparatus, comprising:
a transceiver unit, configured to receive fourth indication information from a first terminal, wherein the fourth indication information indicates to enable aggregated transmission or indicates to disable the aggregated transmission, the aggregated transmission comprises first data transmission that is performed with an access network device through the first terminal and a second terminal, first data comprises first sub-data and second sub-data, the first sub-data is transmitted to the access network device through the first terminal, and the second sub-data is transmitted to the access network device through the second terminal; and
the transceiver unit is further configured to send response information of the fourth indication information to the first terminal.

65. The apparatus according to claim 64, wherein when sending the response information of the fourth indication information to the first terminal, the transceiver unit is specifically configured to:
send fourth sub-indication information to the first terminal, wherein the fourth sub-indication information indicates a manner of distributing the first data into the first sub-data and the second sub-data.

66. The apparatus according to claim 64 or 65, wherein the transceiver unit is further configured to send fifth sub-indication information to the second terminal, wherein the fifth sub-indication information indicates a manner of distributing the first data into the first sub-data and the second sub-data.

67. A communication apparatus, comprising a processor, wherein the processor is coupled to a memory, the memory is configured to store a program or instructions, and when the program or the instructions are executed by the processor, the apparatus is enabled to perform the method according to any one of claims 1 to 5, any one of claims 15 to 19, any one of claims 20 to 26, or any one of claims 27 to 30.

68. A communication apparatus, comprising a processor, wherein the processor is coupled to a memory, the memory is configured to store a program or instructions, and when the program or the instructions are executed by the processor, the apparatus is enabled to perform the method according to any one of claims 6 to 14, or the method according to any one of claims 31 to 33.

69. A computer-readable storage medium, wherein the computer-readable storage medium stores a computer program or instructions, and when the computer program or the instructions are executed, a computer is enabled to perform the method according to any one of claims 1 to 5, any one of claims 15 to 19, any one of claims 20 to 26, any one of claims 27 to 30, any one of claims 6 to 14, or any one of claims 31 to 33.

70. A computer program product comprising instructions, wherein when the computer program product is run, the method according to any one of claims 1 to 5, any one of claims 15 to 19, any one of claims 20 to 26, any one of claims 27 to 30, any one of claims 6 to 14, or any one of claims 31 to 33 is performed.

71. A chip system, comprising at least one processor, a memory, and an interface circuit, wherein the memory, the interface circuit, and the at least one processor are interconnected through a line, and the at least one memory stores instructions; and when the instructions are executed by the processor, a terminal device performs the method according to any one of claims 1 to 5, any one of claims 15 to 19, any one of claims 20 to 26, or a network device performs the method according to any one of claims 6 to 14, any one of claims 27 to 30, or any one of claims 31 to 33.

72. A communication system, comprising a terminal device and a network device, wherein the terminal device is configured to perform the method according to any one of claims 1 to 5, any one of claims 15 to 19, or any one of claims 20 to 26, and the network device is configured to perform the method according to any one of claims 6 to 14, any one of claims 27 to 30, or any one of claims 31 to 33.
